Europäisches Patentamt

European Patent Office

Office européen des brevets

(19)

(11) Publication number: **0 067 044**
**B1**

# EUROPEAN PATENT SPECIFICATION

(45) Date of publication of patent specification: **26.02.86**

(21) Application number: **82302873.3**

(22) Date of filing: **03.06.82**

(51) Int. Cl.⁴: **F 28 D 7/04**, F 25 B 39/02, B 01 D 53/26

(54) **Heat exchanger.**

(30) Priority: **05.06.81 GB 8117335**

(43) Date of publication of application:
**15.12.82 Bulletin 82/50**

(45) Publication of the grant of the patent:
**26.02.86 Bulletin 86/09**

(84) Designated Contracting States:
**AT BE CH DE FR GB IT LI LU NL SE**

(56) References cited:
CH-A- 167 612
CH-A- 589 467
DE-A-1 926 244
FR-A-1 163 224
FR-A-2 338 469
GB-A- 320 108
US-A-3 499 484
US-A-3 722 583
US-A-3 861 165
US-A-4 036 621
US-A-4 287 724

(73) Proprietor: **RUSSELL FINEX LIMITED**
**Russell House 9 Orange Street**
**London WC2H 7EQ (GB)**

(72) Inventor: **Parry, David Colston**
**132 Waalsebaan**
**B-1980 Tervuren (GB)**
Inventor: **Vercauteren, Francois-Theo**
**Grasbloemstraat 7**
**B-2120 Merksem (BE)**

(74) Representative: **Cross, Rupert Edward Blount**
**et al**
**BOULT, WADE & TENNANT 27 Furnival Street**
**London EC4A 1PQ (GB)**

Courier Press, Leamington Spa, England.

## Description

This invention relates to a heat exchanger, and particularly to a heat exchanger for heating or cooling a product fluid such as air.

In US—A—3861165 there is described a heat exchanger apparatus comprising a closed vessel containing a heat transfer fluid, serving as a primary coolant, and immersed in the heat transfer fluid a first coiled tube forming a primary heat exchanger having an inlet and an outlet externally of the vessel for the passage of a product fluid through the first coiled tube, and also immersed in the heat transfer fluid a second coiled tube forming a secondary heat exchanger having an inlet and an outlet externally of the vessel for the passage of a working fluid serving as a secondary coolant through the second coiled tube. The first and second coiled tubes are arranged side by side in the vessel with the flow of the secondary coolant through the second coiled tube being controlled in dependence upon volume variations in the heat transfer fluid (primary coolant) brought about by temperature variations in the product fluid passing through the first coiled tube. Thus, in this apparatus direct heat transfer between the product and working fluids is not of importance and the first and second coiled tubes are not arranged such as to maximise such heat transfer.

In FR—A—1163224 there is described a heat exchanger apparatus comprising a plurality of flat spiral tubes arranged side by side in a vessel containing molten metal as a heat transfer fluid, each spiral tube being doubled-back on itself such that the inlets and outlets of the tubes are all at the outer periphery thereof. Alternate tube in the arrangement serve for the passage of either a product fluid or a working fluid therethrough, and thus both the product fluid and the working fluid flow through their respective tubes from inlets at the outer periphery thereof to return through outlets also at the periphery thereof with heat transfer taking place between the tubes, with the molten metal in the vessel serving as a heat transfer fluid.

According to this invention there is provided a heat exchanger for heating or cooling a product fluid, the exchanger comprising a vessel containing a heat transfer fluid, a plurality of generally flat spiral working tubes at least partially immersed in the heat transfer fluid and each having an inlet and an outlet at opposite ends of the spiral for the passage therethrough of working fluid, and a plurality of generally flat spiral product tubes at least partially immersed in the heat transfer fluid and each having an inlet and an outlet at opposite ends of the spiral for the passage therethrough of the product fluid, whereby heat may be transferred between the product fluid and the working fluid through the heat transfer fluid, the working and product tubes being arranged in alternate layers and such that the directions of flow in adjacent spirals are respectively inwardly and outwardly of the spiral.

The heat exchanger of this invention has the advantage that due to the true spiral configuration of the working and product tubes with the inlets and outlets being at opposite ends of the tubes the directions of flow of the working and product fluids in adjacent tubes can be in opposite directions, this resulting in a degree of efficiency of heat transfer between the working and product fluids much higher than is possible with flow in the same direction as found in the apparatus of FR—A—1163224. Thus, the product flow can flow say inwardly of the product tubes towards the inlets for the working fluid in the working tubes, the working fluid flowing outwardly of the working tubes, this providing for very efficient heat transfer between the working and product fluids.

A further advantage of the heat exchanger of this invention is that the working and product tubes are easy to manufacture being simple flat spirals without any reverse bends as found in the tubes disclosed in FR—A—1163224.

The vessel may have an annular interior containing the heat transfer fluid and tubes.

The tubes of adjacent spirals may abut each other. Furthermore, the directions of flow in abutting tubes of adjacent spirals are preferably in opposite sense. Conveniently, each spiral is orientated substantially horizontally.

Pipes connected to the inlet and outlet of each working and/or product tube may typically pass through a lower wall or the bottom of the vessel. The vessel is preferably a closed container but which is vented.

In the case where the heat exchanger is used for cooling the product fluid, the working fluid would be a refrigerant which could be contained in a refrigerating circuit of which each working tube forms part. A thermostat is preferably provided which is responsive to the cooled product fluid to control the refrigerating circuit to prevent freezing of condensate in the heat exchanger.

The product fluid may be air.

The heat exchanger may form part of a gas dryer, the product fluid being gas to be dryed, there being a separator connected to the outlet of each product tube for separating condensate from the gas cooled in the heat exchanger. Such a gas dryer may have a second heat exchanger connected to the inlets of each product tube and to the separator for transferring heat from incoming gas to outgoing gas.

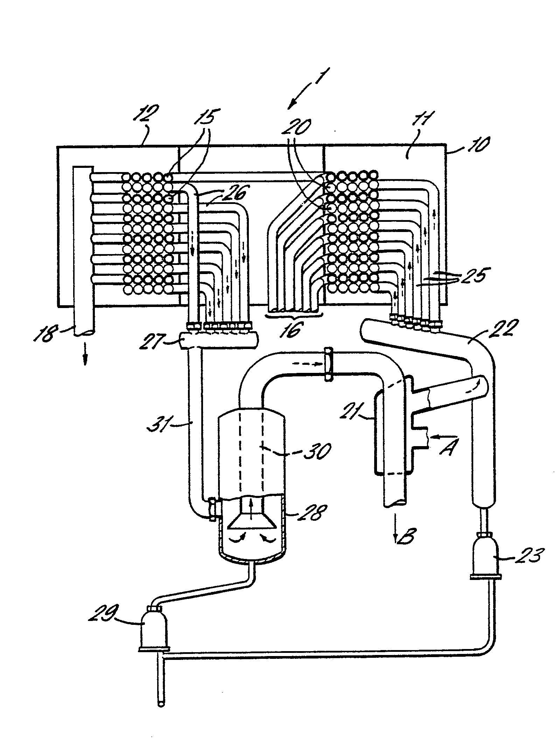

An embodiment of the invention will now be described, by way of example, with reference to the accompanying drawing, which shows in diagrammatic elevation an air dryer incorporating a heat exchanger embodying the invention.

A heat exchanger generally indicated 1 comprises a vessel 10 defining an annular interior containing a heat transfer fluid 11 such as glycol solution. The vessel 10 is closed by a lid 12 which can be removed to allow inspection. The lid is fitted with a plastic venting cap (not shown) to prevent build-up of pressure in the vessel, the cap having a baffle to prevent spillage of glycol during transit. When the heat exchanger is installed, there is of course no need for the baffle.

A plurality of spiral working tubes 15 forming part of a refrigerating circuit for cooling the fluid 11 are immersed in this fluid in the vessel 10. The tubes 15 are supplied with refrigerant through input pipes 16 from a distributor (not shown). After flowing around the tubes 15, the refrigerant is collected at the outer edges of the spirals in a collection pipe 18 which passes out through the bottom of the vessel 10 and conveys the refrigerant back to the compressor (not shown). Also immersed in the fluid 11 is a plurality of spiral product tubes 20 through which the product fluid — in this case the air to be dried — is passed to be cooled.

The refrigerating circuit is controlled by a thermostat (not shown) which is ideally responsive to the temperature of the air flowing from the product tubes 20 to prevent condensate freezing. Conveniently, the thermostat may comprise a capillary operating switch associated with a mercury bulb atached to a product tube 20 in a temperature well at the coldest part of the tube. The thermostat cuts the compressor out near freezing point, for example 1°C, and cuts it in at for example 3°C. It will be appreciated that the choice of the temperature differential between stopping and starting the compressor is a compromise between the desire to achieve close control of the temperature and the undesirability of a short cycle time for the compressor.

The spirals are arranged horizontally in alternate abutting layers of working and product tubes; in the embodiment shown, each spiral has about four and a half turns but need only have a single overlapping turn. However, as will be understood, the greater the number of turns, the greater the resultant heat transfer.

Heat passes from the air to the refrigerant primarily through the fluid 11 but some heat is also transferred directly from the product tubes 20 to the working tubes 15 by virtue of their mutual contact.

Flow of refrigerant in the working tube spirals is outward whereas flow of air in the product tubes is inward. Furthermore, flow in any portion of any tube is opposite in direction to the flow in the abutting tube portion of an adjacent layer. In this way, as the air flows along the tubes 20 it is adjacent progressively cooler refrigerant resulting in greater efficiency of heat transfer.

The air to be dried is passed into a precooler/reheater heat exchanger shown schematically at 21 and thence to a distribution manifold 22, any condensate being drained away through a liquid trap 23. Pipes 25 passing through the bottom of the vessel feed the air from the manifold 22 to the spiral product tubes 20 and the cooled air travels out of the vessel 11 along output pipes 26 to a collection manifold 27 and thence along a pipe 31 to an air/condensate separator 28.

Condensate from the separator drains away through a trap 29 while the dried air passes out of the separator through a conduit 30 and through the heat exchanger 21 to emerge at "B". It will be appreciated that the heat exchange in the exchanger 21 between the incoming wet air at "A" and the outgoing dry air causes the former to be precooled and the latter to be reheated.

All joints between the pipes 25, 26 and manifolds 22, 27 respectively, between pipe 31 and separator 28 and between conduit 30 and exchanger 21 are external and screw-threaded.

The above embodiment of the invention has the advantage that due to the independent tubes for refrigerant and air all immersed in the heat transfer fluid, the air tubes may have small bores and therefore all joints in the air circuit can be screw-threaded. This allows easy inspection, maintenance and replacement of components.

A further advantage is that the intermediate heat transfer fluid, such as glycol, in conjunction with the thermostat allows the air drier to be cycled according to demand, thus saving power costs at partial load conditions, and stabilizes the heat transfer process to control and maintain a minimum temperature of the air with minimum risk of freezing the condensate in the tubes.

**Claims**

1. A heat exchanger (1) for heating or cooling a product fluid, the exchanger comprising
a vessel (10) containing a heat transfer fluid (11),
a plurality of generally flat spiral working tubes (15) at least partially immersed in the heat transfer fluid and each having an inlet and an outlet at opposite ends of the spiral for the passage therethrough of working fluid, and
a plurality of generally flat spiral product tubes (20) at least partially immersed in the heat transfer fluid and each having an inlet and an outlet at opposite ends of the spiral for the passage therethrough of the product fluid,
whereby heat may be transferred between the product fluid and the working fluid through the heat transfer fluid, the working and product tubes being arranged in alternate layers and such that the directions of flow in adjacent spirals are rspectively inwardly and outwardly of the spirals.

2. A heat exchanger as claimed in Claim 1 wherein the vessel (10) has an annular interior containing the heat transfer fluid (11) and tubes (15, 20).

3. A heat exchanger as claimed in either preceding claim wherein the tubes (15, 20) of adjacent spirals abut each other.

4. A heat exchanger as claimed in Claim 3 wherein the directions of flow in abutting tubes (15, 20) of adjacent spirals are in opposite sense.

5. A heat exchanger as claimed in any preceding claim wherein ach spiral is orientated substantially horizontally.

6. A heat exchanger as claimed in any preceding claim further comprising pipes (16, 18, 25, 26) connected to the inlet and outlet of each working and/or product tube (15, 20), which pipes pass through a lower wall or the bottom of the vessel.

7. A heat exchanger as claimed in Claim 6 wherein the vessel (10) is a closed container which is vented.

8. A heat exchanger as claimed in any preceding claim for cooling the product fluid wherein the working fluid is a refrigerant contained in a refrigerating circuit of which each working tube (15) forms part.

9. A heat exchanger as claimed in Claim 8 further comprising a thermostat responsive to the temperature of the cooled product fluid to control the refrigerating circuit to prevent freezing of condensate in the heat exchanger.

10. A heat exchanger as claimed in any preceding claim wherein the product fluid is air.

11. A gas dryer comprising a heat exchanger as claimed in any preceding claim for cooling the product fluid which is gas to be dried, and a separator (28) connected to the outlet of each product tube (20) for separating condensate from the cooled gas.

12. A gas dryer as claimed in Claim 11 further comprising a second heat exchanger (21) connected to the inlet of each product tube (20) and to the separator (28) for transferring heat from incoming gas to outgoing gas.

## Patentansprüche

1. Wärmetauscher (1) zum Erwärmen oder Kühlen eines Produktfluids, welcher aufweist:

ein Gefäß (10), das ein Wärmeübertragungsfluid (11) enthält;

eine Anzahl im allgemeinen flacher, spiralförmiger Arbeitsrohre (15), die wenigstens teilweise in das Wärmeübertragungsfluid eingetaucht sind und von denen jedes an den entgegengesetzten Enden der Spirale einen Einlauf und einen Auslauf aufweist für den Durchtritt von Arbeitsfluid,

und eine Anzahl, im allgemeinen flacher, spiralförmiger Produktrohre (20), die wenigstens teilweise in das Wärmeübertragungsfluid eingetaucht sind, und von denen jedes an den entgegengesetzten Enden der Spirale einen Einlauf und einen Auslauf aufweist für den Durchtritt von Produktfluid, wobei die Wärme zwischen dem Produktfluid und dem Arbeitsfluid über das Wärmeübertragungsfluid übertragen wird und die Arbeits- und Produktrohre in abwechselnden Lagen und so angeordnet sind, daß die Strömungsrichtungen in einander benachbarten Spiralen nach einwärts bzw. auswärts verläuft.

2. Wärmetauscher nach Anspruch 1, dadurch gekennzeichnet, daß das Gefäß (10) einen ringförmigen Innenraum aufweist, der das Wärmeübertragungsfluid (11) und die Rohre (15, 20) enthält.

3. Wärmetauscher nach jedem der vorstehenden Ansprüche, dadurch gekennzeichnet, daß die Rohre (15, 20) benachbarter Spiralen aneinander anliegen.

4. Wärmetauscher nach Anspruch 3, dadurch gekennzeichnet, daß die Strömungsrichtungen in aneinander anliegenden Rohren (15, 20) benachbarter Spiralen einander entgegengesetzt sind.

5. Wärmetauscher nach jedem der vorstehenden Ansprüche, dadurch gekennzeichnet, daß jede Spirale im wesentlichen horizontal ausgerichtet ist.

6. Wärmetauscher nach jedem der vorstehenden Ansprüche, dadurch gekennzeichnet, daß weiterhin Rohre (16, 18, 25, 26) vorgesehen sind, die mit dem Eingang und Ausgang jedes Arbeits- und/oder Produktrohres (15, 20) verbunden sind durch eine untere Wand oder den Boden des Gefäßes durchgeführt sind.

7. Wärmetauscher nach Anspruch 6, dadurch gekennzeichnet, daß das Gefäß (10) ein geschlossener Behälter mit Entlüftung ist.

8. Wärmetauscher nach jedem der vorstehenden Ansprüche zum Kühlen des Produktfluids, dadurch gekennzeichnet, daß das Arbeitsfluid ein Kühlmittel ist, welches in einem Kühlkreislauf enthalten ist, von dem jedes Arbeitsrohr (15) ein Teil ist.

9. Wärmetauscher nach Anspruch 8, dadurch gekennzeichnet, daß ein Thermostat vorgesehen ist, der auf die Temperatur des gekühlten Produktfluids anspricht, um den Kühlkreislauf zu steuern, mit ein Gefrieren des Kondensats im Wärmetauscher zu verhindern.

10. Wärmetauscher nach jedem der vorstehenden Ansprüche dadurch gekennzeichnet, daß das Produktfluid Luft ist.

11. Gastrockner mit einem Wärmetauscher nach jedem der vorstehenden Ansprüche zum Kühlen des Produktfluids, welches zu trocknendes Gas ist, dadurch gekennzeichnet, daß ein Separator (28) mit dem Auslauf jedes Produktrohres (20) verbunden ist, um Kondensat aus dem gekühlten Gas abzutrennen.

12. Gastrockner nach Anspruch 11, dadurch gekennzeichnet, daß ein zweiter Wärmetauscher (21) mit dem Einlauf jedes Produktrohres (20) und dem Separator (28) verbunden ist, um Wärme von dem einströmenden Gas auf das ausströmende Gas zu übertragen.

## Revendications

1. Echangeur de chaleur (1) pour le réchauffement ou le refroidissement d'un fluide de production, comprenant un récipient (10) qui contient un fluide de transmission thermique (11), une multiplicité de tubes de traitement (15) ayant la forme générale d'une spirale plate, immergés au moins partiellement dans le fluide de transmission thermique, chacun comportant une entrée et une sortie aux extrémités opposées de la spirale pour le passage du fluide de traitement à travers lui, et une multiplicité de tubes de production (20) ayant la forme générale d'une spirale plate, immergés au moins partiellement dans le fluide de transmission thermique, chacun comportant une entrée et une sortie aux extrémités opposées de la spirale pour le passage du fluide de production à travers lui, ce qui fait que de la chaleur peut être transférée entre le fluide de production et le fluide de traitement par l'intermédiaire du fluide de transmission thermique, les tubes de traitement et de production étant disposés en couches alternées et de telle manière que les sens d'écoulement dans des spirales voisines soient respectivement vers l'intérieur et vers l'extérieur des spirales.

2. Echangeur de chaleur selon la revendication 1, dans lequel le récipient (10) présente un volume intérieur annulaire, contenant le fluide de transmission thermique (11) et les tubes (15, 20).

3. Echangeur de chaleur selon la revendication 1 ou 2, dans lequel tubes (15, 20) de spirales voisines sont attenants.

4. Echangeur de chaleur selon la revendication 3, dans lequel les directions d'écoulement dans des tubes attenants (15, 20) de spirales voisines sont en sens opposés.

5. Echangeur de chaleur selon l'une quelconque des revendications 1 à 4, dans lequel chaque spirale a une orientation sensiblement horizontale.

6. Echangeur de chaleur selon l'une quelconque des revendications 1 à 5, comprenant en outre des tuyaux (16, 18, 25, 26) raccordés à l'entrée et à la sortie de chaque tube traitement et/ou de production (15, 20), tuyaux qui passent à travers une paroi inférieure ou le fond du récipient.

7. Echangeur de chaleur selon la revendication 6, dans lequel le récipient (10) est un réservoir fermé qui est aéré.

8. Echangeur de chaleur selon l'une quelconque des revendications 1 à 7 pour le refroidissement du fluide de production, le fluide de traitement étant un mélange réfrigérant contenu dans un circuit de réfrigération dont chaque tube de traitement (15) fait partie.

9. Echangeur de chaleur selon la revendication 8, comprenant en outre un thermostat qui réagit à la température du fluide de production refroidi pour commander le circuit de réfrigération de manière à éviter la congélation de condensat dans l'échangeur de chaleur.

10. Echangeur de chaleur selon l'une quelconque des revendications 1 à 9, dans lequel le fluide de production est l'air.

11. Dessiccateur de gaz, comprenant un échangeur de chaleur selon l'une quelconque des revendications 1 à 10 pour le refroidissement du fluide de production qui est un gaz à sécher, et un séparateur (28) raccordé à la sortie de chaque tube de production (20) pour séparer le condensat du gaz refroidi.

12. Dessiccateur de gaz selon la revendication 11, comprenant en outre un second échangeur de chaleur (21) raccordé à l'entrée de chaque tube de production (20) et au séparateur (28) pour transfe-1rer de la chaleur du gaz qui arrive au gaz qui sort.